# EUROPÄISCHE PATENTSCHRIFT

(11) **EP 1 601 514 B1**
(45) Veröffentlichungstag und Bekanntmachung des Hinweises auf die Patenterteilung: **12.12.2007**
(21) Anmeldenummer: 03789119.9
(22) Anmeldetag: 03.12.2003
(51) Int. Cl.: B29C 33/26, B29C 33/36, B29C 44/42

(54) **BETÄTIGUNGSSYSTEM FÜR EXTERN BETÄTIGTES TEIL EINER SCHLIESSEINHEIT**
ACTUATING SYSTEM FOR AN EXTERNALLY ACTUATED PART OF A CLAMPING UNIT
SYSTEME DE COMMANDE DESTINE A UN ELEMENT, COMMANDE DE L'EXTERIEUR, D'UNE UNITE DE FERMETURE

(30) Priorität: 28.02.2003 DE 10308728
(43) Veröffentlichungstag der Anmeldung: 07.12.2005
(73) Patentinhaber: Krauss Maffei GmbH, 80997 München (DE)
(72) Erfinder: LAAR, Erwin, 83607 Holzkirchen (DE); HOLZNER, Manfred, 82194 Gröbenzell (DE); HONTZ, Janusz, 85614 Kirchseeon (DE)
(74) Vertreter: Zollner, Richard
(86) Internationale Anmeldenummer: PCT/EP2003/013623
(87) Internationale Veröffentlichungsnummer: WO 2004/076148

(56) Entgegenhaltungen:
- DE-A- 2 051 525
- FR-A- 2 208 032
- US-A- 3 647 345
- US-A- 4 008 990

## Beschreibung

Die Erfindung betrifft eine Betätigungssystem für ein von extern zu betätigendes Teil einer Schließeinheit, insbesondere für einen Formträger einer Schließeinheit, gemäß dem Oberbegriff des Anspruchs 1.

Im Folgenden beziehen wir uns auf eine Schließeinheit für eine Kunststoff verarbeitenden Maschine mit zumindest einem Formträger. Es ist jedoch ausdrücklich zu betonen, dass die vorliegende Erfindung auch für andere, von extern zu betätigende Teile von Schließeinheiten anwendbar ist. Von extern zu betätigen bedeutet dabei, dass nicht innerhalb der Schließeinheit eine Öffnungs- und Schließvorrichtung angeordnet ist, sondern dass das Öffnen und Schließen der Schließeinheit von außerhalb der Schließeinheit bewirkt wird.

Bei Schließeinheiten von Kunststoff verarbeitenden Maschinen, wie beispielsweise Polyurethan-Anlagen, gibt es in der Regel zwei Formträger, welche zum Schließen und Öffnen der Schließeinheit aufeinander zu (Schließen) bzw. voneinander weg (Öffnen) bewegbar sind. In diesem Zusammenhang wird beispielsweise auf die Deutsche Patentanmeldung DE 101 52 392 verwiesen, in der eine Schließeinheit für Kunststoffmaschine beschrieben ist. Die dort dargestellte Schließeinheit umfasst einen unteren Formträger und einen oberen Formträger, die jeweils um eine gemeinsame Achse verschwenkbar sind. Der untere Formträger wird dabei während des Betriebs der gesamten Schließeinheit zwischen zwei Positionen hin- und herbewegt werden, nämlich einer unteren Position, in der Formelemente in den Formträger eingelegt werden oder Formteile entnommen werden können, und einer oberen Position, bei der ein Schließen der Schließeinheit insgesamt stattfindet, um ein eingebrachtes Ausgangsmaterial vorgebend zu bearbeiten. Der obere Formträger wird während des Betriebs der gesamten Schließeinheit ebenfalls zwischen zwei Positionen hin- und herbewegt, und zwar in eine obere Position, in der die Schließeinheit geöffnet ist und eine untere Position, zum Formen des eingebrachten Ausgangsmaterials selbst.

In der DE 101 52 392 selbst sind die Schließeinheiten selbst fest an einem Ort angeordnet, lediglich die einzelnen Formträger sind schwenkbar befestigt.

Es ist jedoch bekannt, beispielsweise mehrere Schließeinheiten beispielsweise auf einem Drehteller oder Drehtisch anzuordnen, wobei beim Betrieb des Drehtisches die einzelnen Schließeinheiten nacheinander die gleichen Arbeitschritte durchlaufen. Beispielsweise kann in einer geöffneten Schließeinheit ein Ausgangsmaterial eingebracht werden. Gleichzeitig kann in einer anderen Schließeinheit das Ausgangsmaterial formgebend bearbeitet werden. Bei einer anderen Schließeinheit wiederum kann ein gleichzeitig fertiggestelltes Formteil entnommen werden. Bei der Verwendung solcher Vorrichtungen ist es - ebenso wie bei der DE 101 52 392 - notwendig, die verschiedenen Teile der Schließeinheiten in vorgegebener Weise zu betätigen, insbesondere zu verschwenkend zu öffnen und zu schließen.

Eine an sich bekannte Methode (vgl. DE 20 51 525) sind die Verwendung von externen Betätigungsorganen, wobei beispielsweise an einem von extern zu betätigenden Teil einer Schließeinrichtung, beispielsweise an einem oberen Formträger, eine Laufrolle angeordnet ist, welche zumindest teilweise auf einer Schienenkonstruktion abläuft und bei bestimmten Positionen von einem Greiforgan geöffnet oder geschlossen wird. Als Greiforgan ist es bekannt, beispielsweise ein U-Profilelement zu verwenden, in dessen Nut die Laufrolle einfahrbar ist. Ist die Laufrolle in der Nut des U-Profilelements aufgenommen, so kann es durch Bewegen (Verschwenken, Verfahren) des U-Profilelements zu einem Bewegen des oberen Formträgers kommen. Hat der obere Formträger eine bestimmte Position erreicht, läuft er aus der Nut des U-Profilelements wieder heraus und kann beispielsweise nachfolgend auf einer weiteren Schiene mittels der Laufrolle abrollen.

Die Verwendung solcher starren Profile oder Schienen für das Greiforgan hat jedoch den Nachteil einer Relativbewegung von Laufrolle und Schiene bei der Betätigung der gesamten Schließeinheiten. Dies führt zu einem relativ hohen Verschleiß in Folge von Reibung. Zudem muss das Greiforgan genau justiert und bewegt werden, um den Verschleiß möglichst gering zu halten.

Aufgabe der vorliegenden Erfindung ist es, bei einem Betätigungssystem der eingangs genannten Art einen Verschleiß möglichst zu minimieren.

Diese Aufgabe wird durch die im Anspruch 1 genannten Merkmale gelöst.

Demgemäß liegt ein wesentlicher Gedanke der Erfindung bei einem gattungsgemäßen Betätigungssystem darin, dass das Greiforgan zumindest zwei zueinander parallele, mit einem bestimmten Abstand zueinander angeordnete, frei bewegbare Führungsrollen umfasst, deren Achse im wesentlichen parallel oder tangential zu einer ersten Richtung, in die sich die gesamte Schließeinheit bewegt, ausgerichtet sind. Dabei ist der Abstand zwischen den beiden Führungsrollen im wesentlichen gleich dem Durchmesser der Laufrolle oder etwas größer gewählt, so dass die Laufrolle in diesem Abstand aufgenommen werden kann. Die Laufrolle ist zu Bewegung des extern zu betätigenden Teils, z. B. eines Formträgers in eine offene oder geschlossene Richtung in diesen Abstand hinein verfahrbar bzw. nach der Betätigung aus dem Abstand heraus verfahrbar.

Durch die Verwendung von frei bewegbaren Führungsrollen im Zusammenspiel mit der Laufrolle des extern zu betätigenden Teils kann eine Gleitreibung zwischen der Laufrollen und dem Greiforgan selbst vermieden werden. Vielmehr verändert sich der Auflagepunkt von der Laufrolle an dem Greiforgan durch eine Rollbewegung einer oder beider Führungsrollen in axiale Richtung der Laufrolle, ohne dass es zu irgendeiner Gleitreibung kommt. Es wird lediglich eine Drehbewegung der Führungsrollen ausgeführt.

Insgesamt kann ein minimierter Verschleiß auch bei Fluchtfehlern sicher gestellt werden.

Natürlich können mehr als eine Betätigungseinheit vorgesehen sein. In diesem Fall können die einzelnen Betätigungseinheiten darauf spezialisiert sein, die extern zu betätigenden Teile, beispielsweise die Formträger fortwährend zu öffnen bzw. - bei einer anderen Betätigungseinheit - die Formträger immer zu schließen. Jede Betätigungseinheit kann ein, zwei oder mehrere Greiforgane umfassen. Bei der Verwendung von mehreren Greiforganen kann durch eine umlaufende Bewegung der einzelnen Greiforgane eine Hin- und Herbetätigung vermieden werden.

Gemäß einer besonders bevorzugten Ausführungsform sind zwei parallel zueinander angeordnete und voneinander beabstandete Endlosketten und -bänder gleicher Länge angeordnet, an denen die Greiforgane im wesentlichen quer zur Bewegungsrichtung, insbesondere im Bereich deren Enden befestigt sind. Mit solch einer Ausführungsform können die zwei oder mehreren Greiforgane die Öffnungs- oder Schließbewegung des von extern zu betätigenden Teils durch einen umlaufenden Betrieb der Ketten oder Bänder in nur eine Richtung durchführen. Mehr Informationen dazu sind nachfolgend im Ausführungsbeispiel wiedergegeben.

Die Endlosketten sind vorzugsweise über zwei Umlenkräder oder -rollen umgelenkt. Dabei kann eine Umlenkrolle oder ein Umlenkzahnrad als Spannvorrichtung oder in Zusammenwirkung mit einer Spannvorrichtung ausgebildet sein. Dies Endlosketten oder -bänder werden vorzugsweise über einen Motor, beispielsweise über einen Elektromotor angetrieben.

Um die Führung des von extern zu betätigenden Teils auch in dem Abschnitt zwischen zwei Betätigungseinheiten sicher zu stellen, kann dazwischen ein Schiene vorgesehen sein, auf der die Laufrollen abrollt. Dabei sollte die Schiene derart an die Greiforgane angrenzen, dass bei der Bewegung der Schließeinheit in eine vorgegebene Richtung ein stetiger Übergang zwischen Schiene und Greiforganen sichergestellt ist.

Gemäß einer besonders bevorzugten Ausführungsform sind mehrere Schließeinheiten auf einem sich beim Betrieb der Schließeinheiten drehenden Drehtisch jeweils in gleichem radialen Abstand von Drehpunkt des Drehtisches angeordnet. Sie durchlaufen sukzessive jeweils eine Betätigungseinheit, einen nachfolgenden Schienenabschnitt, sowie eine weitere Betätigungseinheit. Die erste Betätigungseinheit öffnet das von extern zu betätigende Teil der Schließeinrichtung von einer ersten Position auf ein Niveau des Schienenabschnittes, und die zweite Betätigungseinheit schließt das extern zu betätigende Teil vom Niveau auf die erste Position zurück.

Eine vorteilhafte Ausführungsform der Erfindung wird nachfolgend mit Bezug auf die beiliegenden Zeichnungen näher beschrieben. Die Zeichnungen zeigen in:
- Fig. 1:: eine stark schematisierte Seitenansicht in einer Rundtischanlage mit mehreren Schließeinheiten und einem Betätigungssystem gemäß der vorliegenden Erfindung und
- Fig. 2:: ein Rundtischsystem gemäß Fig. 1 ein Draufsicht, wobei der Rundtisch nur zum Teil dargestellt ist.

Die vorliegende Erfindung wird nachfolgend anhand eines Rundtischsystems für PUR-Anlagen (Polyurethan-Anlagen) näher dargestellt. Allerdings ist die Erfindung nicht auf dieses System beschränkt.

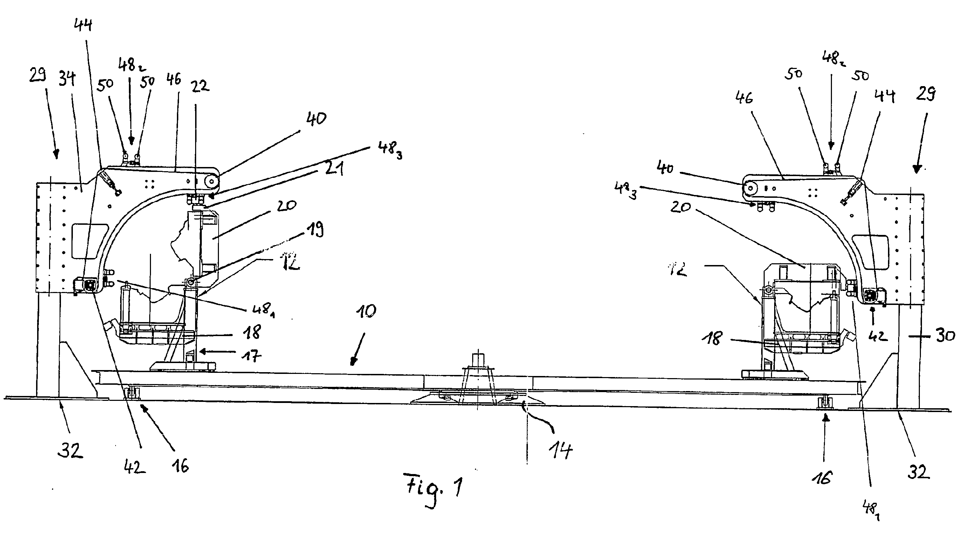

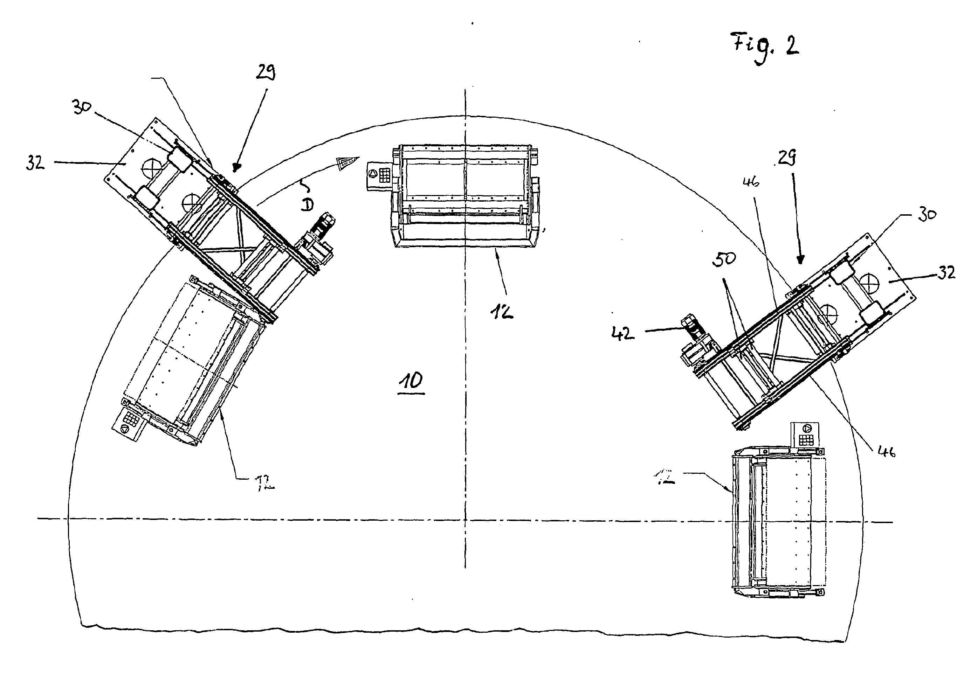

Mehrere Schließeinheiten 12 einer weiter nicht näher dargestellten PUR-Anlage sind auf einem Drehtisch 10 im wesentlichen mit gleichem radialen Abstand zu dessen Zentrum sowie winkelversetzt gegeneinander fest angeordnet. In Fig. 1 sind zwei gegenüberliegend angeordnete Schließeinheiten und in Fig. 2 drei winkelversetzt zueinander angeordnete Schließeinheiten dargestellt. Jede Schließeinheit 12 umfasst einen unteren Formträger 18 und einen oberen Formträger 20, welche beide um eine gemeinsame Gelenkachse 19 nach oben und unten verschwenkt werden können. Natürlich können separate Gelenkachsen für jeden Formträger vorgesehen sein.

Durch die Verschwenkung der unteren und oberen Formträger 18, 20 kann jede Schließeinheit 12 insgesamt geschlossen oder geöffnet werden und dadurch die Formträger in eine Lage versetzt werden, dass in ergonomisch günstiger Weise Formelement eingelegt oder fertige Formprodukte aus einer Form entnommen werden können.

Die vorliegende Erfindung befasst sich lediglich mit der Verschwenkung des oberen Formträgers 20. Auf den Verschwenkmechanismus für den unteren Formträger 18 wird vorliegend nicht näher eingegangen.

Der obere Formträger 20 besitzt einen bezüglich der Drehtischerstreckung radial nach außen vorstehenden Arm 21, an dessen äußerem Ende eine Laufrolle 22 angeordnet ist. Die Drehachse der Laufrolle 22 stimmt im wesentlichen mit der radialen Richtung des Drehtisches überein, kann aber durch außermittige Anordnung der Laufrolle 22 am oberen Formträger 20 geringfügig davon abweichen.

Das erfindungsgemäße Betätigungssystem umfasst insbesondere zwei Betätigungseinheiten 29, die sowohl in der Fig. 1 wie auch in der Fig. 2 zu erkennen sind. Jede Betätigungseinheit 29 besitzt einen auf dem Boden stehenden Fuß 32, an dem sich eine vertikale Stütze 30 anschließt. Am oberen Ende der vertikalen Stütze 30 ist ein Rahmen der Betätigungseinheit vorgesehen, der im wesentlichen aus zwei vertikal ausgerichteten plattenförmigen, gegeneinander abgestützten Seitenteilen besteht, von denen in Fig. 1 jeweils eins gut zu erkennen ist. Zwischen den beiden plattenförmigen Seitenteilen einer Betätigungseinheit sind vorliegend drei Doppelzahnräder 40, 42 und 44 angeordnet, deren Achsen sich parallel zueinander erstrecken. Jedes Doppelzahnrad 40 ist am oberen inneren Ende seines Rahmens 34, jede Doppelzahnrad 42 an dem unteren Ende seines Rahmens 34 und jede Doppelzahnrad 44 im wesentlichen vertikal über einem Doppelzahnrad 42 und horizontal außerhalb einem Doppelzahnrad 40 angeordnet (vergleiche Fig. 1). Zwischen den Doppelzahnrädern 42 und 44 ist der Rahmen 34 im wesentlichen viertelbogenförmig gestaltet. Auf den einzelnen Zahnrädern auf einer Seite der Doppelzahnräder 40, 42 und 44 laufen jeweils die beiden Endlosketten ab, an denen quer zu deren Bewegungsrichtung drei in Umlaufrichtung der Ketten versetzte Greiforgane bzw. Führungselemente 48₁, 48₂, 48₃ angeordnet sind.

Jedes Führungselement 48 umfasst einen nicht näher dargestellten Träger sowie zwei voneinander beabstandete und parallel zueinander angeordnete, frei drehbare Führungsrollen 50. Der Abstand der beiden Führungsrollen 50 ist entsprechend dem Durchmesser der Laufrolle 22 gewählt, so dass die Laufrolle 22 - wie nachfolgend noch genauer erläutert - zwischen den beiden Führungsrollen aufgenommen werden kann. Das als Spannelement dienende Doppelzahnrad 44 kann über eine nicht dargestellte Spannvorrichtung so bewegt werden, dass die beiden Ketten in ausreichendem Maße gespannt werden können.

Das untere Umlenk- und Führungsrad besitzt überdies einen Antrieb, welcher zur Bewegung der beiden Ketten in deren Laufrichtung ausgebildet ist.

Zwischen den beiden Betätigungseinheiten 29 (in den Fig. 1 und 2 nicht näher dargestellt) ist etwa auf Höhe der in den Fig. 1 innersten Führungselementen 48₃ ein kreissegmentförmiges Schienenelement angeordnet, dass eine Verbindung zwischen den beiden oberen Führungselementen 48₃ darstellt, so dass - wie nachfolgend ebenfalls erläutert - eine Führung des oberen Formträgers durch Abrollen der Laufrolle 22 auf dieser Schiene zwischen den beiden Betätigungseinheiten 29 möglich ist.

Im Folgenden wird der Betrieb des Drehtisches mit darauf angeordneten Schließeinheiten 12 näher erläutert. Der Drehtisch 10 wird in Pfeilrichtung D (Fig. 2) zusammen mit den darauf montierten Schließeinheiten 12 gedreht. Dabei ist er sowohl zentral wie auch außen über Lagerungen 14 und 16 abgestützt. Bei einer bevorzugten Ausführungseinheit sind 12 Schließeinheiten auf dem Drehtisch 10 angeordnet (nur jeweils 2 Schließeinheiten sind in den Fig. Dargestellt). In dem in Fig. 2 unteren Teil des Drehtisches ist befindet sich der obere Formträger 20 in seiner geschlossenen Position (wie in Fig. 1 auf der rechten Seite) dargestellt, und ist dort mit dem unteren Formträger 18 verriegelt. In dieser Position kann die Laufrolle 22 des oberen Formträgers 20 in den Abstand zwischen den beiden Führungsrollen 50 eines Führungselementes 48 einfahren, welche in Fig. 1 auf der linken Seite unten angeordnet ist. Nach dem Einführen der Laufrolle 22 in den Abstand, wird dieses Führungselement 48₁ durch Betätigen des Antriebs am unteren Umlenk- oder Führungszahnrad auf bogenförmigem Weg, dargestellt in Fig. 1, nach oben bewegt und zwar bis zur Position des in Fig. 1 dargestellten oberen Führungselementes 48₃. Während dieser Bewegung findet eine Relativbewegung zwischen der Laufrolle 22 und den Führungsrollen 50 in zweierlei Hinsicht statt. Zum einen fährt die Laufrolle 22 entlang der Achse der Führungsrollen, zum anderen findet eine Verschiebung des Auflagepunktes in Achsrichtung der Laufrolle 22 statt. Letztere Verschiebung erzeugt jedoch durch die freie Drehbarkeit der Führungsrollen keinerlei Gleitreibung und somit im wesentlichen keine Abnutzung. Zu dem verändern sich die Berührungslinien über die Rollbreite der verschiedenen Rollen hinweg, was ebenfalls zu einer Minimierung des Verschleißes beiträgt.

Durch das Bewegen der Laufrolle 22 von der Position des unteren Führungselementes 48₁ zum oberen Führungselement 48₃ wird der obere Formträger 20 nah oben verschwenkt und dabei geöffnet. In dieser Position fährt die Laufrolle 22 dann aus dem Abstand zwischen den beiden Führungsrollen 50 des oberen Führungselementes 48₃ aus und läuft kontinuierlich auf der nicht dargestellten Laufschiene kreissegmentförmig ab. Während dieser Bewegung des Drehtisches 10 ist der obere Formträger 20 ständig im geöffneten Zustand. Erreicht der oberen Formträger 20 dann die weitere Betätigungseinheit 29, die als Schließstation wirkt, so fährt die Laufrolle 22 wieder in den Abstand zwischen den beiden Führungsrollen 50 des oberen Führungselementes 48₃ ein. In umgekehrter Weise, wie bei der gegenüberliegenden Betätigungseinheit 29 wird durch den Betrieb des Antriebs bei dem Umlenk- und Führungsrad 42 das obere Führungselement 48₃ nunmehr nach unten bewegt, wodurch der obere Formträger 20 in analoger Weise geschlossen wird. Bei der Bewegung wird wiederum das Führungselement 48₃ über eine Viertelkreisweg bewegt. In der unteren Position wird der obere Formträger 20 dann verriegelt und läuft aus dem Abstand zwischen den beiden Führungsrollen 50 aus.

Durch Anordnen von jeweils drei Führungselementen 48₁, 48₂, 48₃ an den beiden Ketten 46 der dargestellten zwei Betätigungseinheiten 29 ist es möglich, die Ketten jeweils nur in einer Bewegungsrichtung bewegen zu müssen. Bei entsprechender Abstimmung der Kettenlänge befindet sich dann ein Führungselement 48 in einer Auslaufposition, während das andere Führungselement 48 in der Einlaufposition angeordnet ist. Bei einer Verschwenkung des oberen Formteils 20 nach oben oder nach unten wird gleichzeitig ein nächstes Führungselement 48 in die dafür notwendige Position für den nachfolgenden oberen Formträger 20 einer nächsten Schließeinheit 12 bewegt. In Fig. 1 bewegen sich alle Ketten entgegengesetzt zum Uhrzeigersinn. Natürlich sind auch Ausführungsformen mit nur einem Greiforgan möglich, die dann hin- und herbewegt werden.

Mit der vorliegenden Erfindung ist es insgesamt möglich, eine übermäßige Abnutzung zu vermeiden und eine leichte Justierung und Kompensierung von Fertigungs- und Montagetoleranzen sicher zustellen. Eine Abnutzung wie bei vormals verwendeten festen U-Profilen oder anderen fest angeordneten Schienen kann damit vermieden werden.

## Patentansprüche

1. Betätigungssystem für ein von extern zu betätigendes Teil einer Schließeinheit, insbesondere für einen Formträger einer Schließeinheit, wobei
- die gesamte Schließeinheit (12) beim Betrieb eine Bewegung in eine vorgegebene erste Richtung (D) durchführt und das von extern zu betätigende Teil (20) zwischen zumindest zwei Positionen bewegbar ist,
- das von extern zu betätigende Teil (20) ein Führungselement in Form einer Laufrolle (22) aufweist, welches zur Erreichung zumindest einer der Positionen von zumindest einer separat zur Schließeinheit (12) angeordneten Betätigungseinheit (29) in eine vorgegebene zweite Richtung bewegbar ist, und
- die Betätigungseinheit (29) zumindest ein Greiforgan (48) umfasst, welches die Laufrolle (22) zur Bewegung des Teil (20) in die vorgegebene zweite Richtung ergreift und in diese Richtung bewegt,
- die Laufrolle (22) zur Bewegung des extern zu betätigenden Teils (20) in die vorgegebene zweite Richtung in einen Abstand des Greiforgans (48) hinein verfahrbar und nachfolgend aus dem Abstand herausverfahrbar ist,
**dadurch gekennzeichnet, dass**
das Greiforgan (48) zwei zueinander parallele, mit einem bestimmten Abstand zueinander angeordnete, frei bewegbare Führungsrollen (50) umfasst, deren Achsen im wesentlichen parallel oder tangential zur ersten Richtung (D) ausgerichtet sind, wobei der Abstand zwischen den beiden Führungsrollen (50) im wesentlichen dem Durchmesser der Laufrolle (22) entspricht oder etwas größer als der Durchmesser der Laufrolle (22) ist.

2. Betätigungssystem nach Anspruch 1, **dadurch gekennzeichnet, dass** mehrere, insbesondere zwei, Betätigungseinheiten (29) vorgesehen sind, die mit einer oder mehreren Schließeinheiten (12) zusammenwirken.

3. Betätigungssystem nach Anspruch 2, **dadurch gekennzeichnet, dass** eine Betätigungseinheit (29) zur Bewegung des extern zu betätigenden Teils (20) nach oben und eine Betätigungseinheit (29) zur Bewegung des extern zu betätigenden Teils (20) nach unten vorgesehen ist.

4. Betätigungssystem nach einem der vorhergehenden Ansprüche, **dadurch gekennzeichnet, dass** jede Betätigungseinheit (29) zwei oder mehrere Greiforgane (48) umfasst.

5. Betätigungssystem nach einem der vorhergehenden Ansprüche, **dadurch gekennzeichnet, dass** bei einer Betätigungseinheit (29) zwei parallel zueinander angeordnete und voneinander beabstandete Endlosketten (46) oder -bänder gleicher Länge angeordnet sind, und jedes Greiforgan (48) im wesentlichen quer zur Bewegungsrichtung der Endlosketten (46) oder -bänder an diesen befestigt ist.

6. Betätigungssystem nach Anspruch 5, **dadurch gekennzeichnet, dass** die Endlosketten (46) oder -bänder über zumindest zwei Umlenkräder (40, 42, 44) oder -rollen umgelenkt sind.

7. Betätigungssystem nach Anspruch 5 oder 6, **dadurch gekennzeichnet, dass** zumindest eines der Umlenkräder (44) oder eine der Umlenkrollen mit einer Spannvorrichtung zum Spannen der Endloskette (46) oder -bänder zusammenwirkt.

8. Betätigungssystem nach einem der vorhergehenden Ansprüche, **dadurch gekennzeichnet, dass** die Endlosketten (46) oder -bänder über einen Elektromotor 42) angetrieben sind.

9. Betätigungssystem nach einem der vorhergehenden Ansprüche, **dadurch gekennzeichnet, dass** zwischen zwei Betätigungseinheiten (29) ein Schiene vorgesehen ist, auf der die Laufrolle (22) abrollt und die Schiene derart an die Greiforgane (48) angrenzt, dass bei der Bewegung der Schließeinrichtung (12) in die vorgegebene Richtung (D) ein stetiger Übergang zwischen der Schiene und den Greiforganen (48) gegeben ist.

10. Betätigungssystem nach einem der vorhergehenden Ansprüche, **dadurch gekennzeichnet, dass** mehrere Schließeinheiten (12) auf einem sich beim Betrieb der Schließeinheiten drehenden Drehtisch (10) jeweils in gleichem radialen Abstand vom Drehpunkt des Drehtisches (10) angeordnet sind und sukzessive jeweils eine Betätigungseinheit (29), einen Schienenabschnitt sowie eine weitere Betätigungseinheit (29) durchlaufen, wobei die erste Betätigungseinheit (29) das extern zu betätigende Teil (20) von einer ersten Position auf ein Niveau des Schienenabschnittes und die zweite Betätigungseinheit (29) das extern zu betätigende Teil (20) vom Schienenniveau auf die erste Position bewegt.

## Claims

1. An actuating system for a part of a clamping unit to be externally actuated, particularly for a mould carrier of a clamping unit, wherein
- the entire clamping unit (12) carries out a movement in a predetermined first direction (D) during the operation of the system and the part (20) to be externally actuated can be moved between at least two positions,
- the part (20) to be externally actuated features a guide element in the form of a roller (22) that can be moved in a predetermined second direction by at least one actuating unit (29) that is arranged separately of the clamping unit (12) in order to reach at least one of the positions, and
- the actuating unit (29) comprises at least one gripper element (48) that takes hold of the roller (22) in order to move the part (20) in the predetermined second direction and moves in this direction,
- the roller (22) can be displaced into a clearance of the gripper element (48) in order to move the part (20) to be externally actuated in the predetermined second direction and subsequently displaced out of said clearance,
**characterized in that**
the gripper element (48) comprises two parallel guide rollers (50) that are freely movable and spaced apart from one another by a certain distance, wherein the axes of said guide rollers are oriented essentially parallel or tangential to the first direction (D), and wherein the spacing between the two guide rollers (50) essentially corresponds to the diameter of the roller (22) or is slightly larger than the diameter of the roller (22).

2. The actuating system according to Claim 1, **characterized in that** several actuating units (29) are provided, particularly two actuating units that cooperate with one or more clamping units (12).

3. The actuating system according to Claim 2, **characterized in that** one actuating unit (29) is provided for moving the part (20) to be externally actuated upward and one actuating unit (29) is provided for moving the part (20) to be externally actuated downward.

4. The actuating system according to one of the preceding claims, **characterized in that** each actuating unit (29) comprises two or more gripper elements (48).

5. The actuating system according to one of the preceding claims, **characterized in that** an actuating unit (29) features an arrangement of two parallel endless chains (46) or endless bands of identical length that are spaced apart from one another, and **in that** each gripper element (48) is fixed on the endless chains (46) or endless bands essentially transverse to the moving direction thereof.

6. The actuating system according to Claim 5, **characterized in that** the endless chains (46) or endless bands are deflected by at least two deflection pulleys (40, 42, 44) or deflection rollers.

7. The actuating system according to Claim 5 or 6, **characterized in that** at least one of the deflection pulleys (44) or one of the deflection rollers cooperates with a tensioning device for tensioning the endless chain (46) or endless bands.

8. The actuating system according to one of the preceding claims, **characterized in that** the endless chains (46) or endless bands are driven by an electric motor (42).

9. The actuating system according to one of the preceding claims, **characterized in that** the roller (22) rolls on a rail provided between two actuating units (29) and the rail borders on the gripper elements (48) in such a way that a continuous transition is formed between the rail and the gripper elements (48) during the movement of the clamping device (12) in the predetermined direction (D).

10. The actuating system according to one of the preceding claims, **characterized in that** several clamping units (12) are respectively arranged on a turntable (10) that turns during the operation of the clamping units at the same radial distance from the center of motion of the turntable (10) and respectively pass through an actuating unit (29), a rail section and another actuating unit (29) in succession, wherein the first actuating unit (29) moves the part (20) to be externally actuated from a first position to the level of the rail section and the second actuating unit (29) moves the part (20) to be externally actuated from the rail level to the first position.

## Revendications

1. Système de commande destiné à un élément commandé de l'extérieur pour unité de fermeture, notamment pour un support de moule d'une unité de fermeture, dans lequel
- l'ensemble de l'unité de fermeture (12) exécute en cours de marche un mouvement dans un premier sens prescrit (D) et l'élément commandé de l'extérieur (20) est mobile entre au moins deux positions,
- l'élément commandé de l'extérieur (20) comporte un élément de guidage sous la forme d'un rouleau (22) qui, pour atteindre au moins une des positions, peut être déplacé par au moins une unité de commande (29) disposée séparément de l'unité de fermeture (12) dans un deuxième sens prescrit, et
- l'unité de commande (29) comprend au moins un organe de saisie (48) qui attrape le rouleau (22) permettant de déplacer l'élément (20) dans le deuxième sens prescrit et le déplace dans ce sens,
- le rouleau (22) permettant de déplacer l'élément commandé de l'extérieur (20) dans le sens prescrit peut être avancé dans un intervalle de l'organe de saisie (48) et être ensuite éloigné de cet intervalle,
**caractérisé en ce que**
l'organe de saisie (48) comprend deux rouleaux de guidage (50) librement mobiles et parallèles l'un à l'autre, disposés à une certaine distance l'un de l'autre, dont les axes sont orientés sensiblement parallèlement ou tangentiellement par rapport au premier sens (D), la distance entre les deux rouleaux de guidage (50) étant sensiblement équivalente au diamètre du rouleau (22) ou un peu supérieure au diamètre du rouleau (22).

2. Système de commande selon la revendication 1, **caractérisé en ce qu'**il est prévu plusieurs, notamment deux unités de commande (29) qui coopèrent avec une ou plusieurs unités de fermeture (12).

3. Système de commande selon la revendication 2, **caractérisé en ce qu'**il est prévu une unité de commande (29) pour déplacer le premier élément commandé de l'extérieur (20) vers le haut et une unité de commande (29) pour déplacer le premier élément commandé de l'extérieur (20) vers le bas.

4. Système de commande selon une des revendications précédentes, **caractérisé en ce que** chaque unité de commande (29) comprend deux organes de saisie (48) ou plus.

5. Système de commande selon une des revendications précédentes, **caractérisé en ce que**, dans chaque unité de commande (29), sont disposés deux chaînes ou bandes sans fin (46) de même longueur disposées parallèles l'une à l'autre et espacées l'une de l'autre et que chaque organe de saisie (48) est fixé sensiblement transversalement au sens de déplacement des chaînes ou bandes sans fin (46) sur ces dernières.

6. Système de commande selon la revendication 5, **caractérisé en ce que** les chaînes ou bandes sans fin (46) sont inversées par au moins deux roues ou rouleaux d'inversion (40, 42, 44).

7. Système de commande selon la revendication 5 ou 6, **caractérisé en ce qu'**au moins une des roues d'inversion (44) ou un des rouleaux d'inversion coopère avec un dispositif de tension permettant de tendre la chaîne ou les bandes sans fin (46).

8. Système de commande selon une des revendications précédentes, **caractérisé en ce que** les chaînes ou bandes sans fin (46) sont entraînées par un moteur électrique (42).

9. Système de commande selon une des revendications précédentes, **caractérisé en ce qu'**entre deux unités de commande (29), il est prévu un rail sur lequel roule le rouleau (22) et que le rail est adjacent aux organes de saisie (48) de telle sorte que, lors du mouvement du dispositif de fermeture (12) dans le sens prescrit (D), il se produit une transition constante entre le rail et les organes de saisie (48).

10. Système de commande selon une des revendications précédentes, **caractérisé en ce que** plusieurs unités de fermeture (12) sont disposées sur un plateau tournant (10) tournant en cours de marche des unités de fermeture respectivement à une même distance radiale du point de rotation du plateau tournant (10) et passent successivement respectivement dans une unité de commande (29), une section de rail ainsi qu'une unité de commande (29), la première unité de commande déplaçant l'élément commandé de l'extérieur (20) d'une première position à un niveau de la section de rail et la deuxième unité de commande (29) déplaçant l'élément commandé de l'extérieur (20) du niveau du rail à la première position.
